# EUROPÄISCHE PATENTSCHRIFT

(11) **EP 0 956 231 B1**
(45) Veröffentlichungstag und Bekanntmachung des Hinweises auf die Patenterteilung: **28.11.2001**
(21) Anmeldenummer: 98900063.3
(22) Anmeldetag: 07.01.1998
(51) Int. Cl.: B62D 25/20

(54) **LADEFLÄCHE FÜR EIN NUTZFAHRZEUG**
UTILITY VEHICLE LOADING SURFACE
SURFACE DE CHARGEMENT POUR VEHICULE UTILITAIRE

(30) Priorität: 30.01.1997 DE 19703203
(43) Veröffentlichungstag der Anmeldung: 17.11.1999
(73) Patentinhaber: Alcan Technology & Management AG, 8212 Neuhausen am Rheinfall (CH)
(72) Erfinder: HAAG, Martin, D-84478 Waldkraiburg (DE); BORGHARDT, Detlef, D-78315 Radolfzell (DE); KEMEN, Hans-Jörgen, D-78224 Singen (DE)
(86) Internationale Anmeldenummer: CH9800005
(87) Internationale Veröffentlichungsnummer: WO9833696

(56) Entgegenhaltungen:
- WO-A-96/07801
- BE-A- 688 439
- DE-A- 4 243 093
- US-A- 4 352 520

## Beschreibung

Die Erfindung betrifft eine Ladefläche für ein Nutzfahrzeug entsprechend dem Oberbegriff des Anspruches 1.

Die Ladefläche von Nutzfahrzeugen kann bekanntermaßen mit Warzenblechen oder Gerstenkornblechen als Bodenplatte ausgestattet werden. Streifenförmige Bleche dieser Art sind miteinander verschweißt, also thermisch verbunden mit den bei thermischen Verbindungen bekannten Nachteilen.

Die gattungsgemäße DE 42 43 093 A1 beschreibt einen Profilboden für Nutzfahrzeuge mit einem tragenden Grundboden, sowie darauf flächig aufgebrachten einzelnen, miteinander verbundenen, auf der Oberfläche profilierten Plattenelementen, die mittels einer speziellen Nase/Nocke-Vorrichtung an ihren parallelen Außenkanten in horizontaler und vertikaler Richtung gegeneinander vorfixiert werden können. Das endgültige Festlegen der Plattenelemente geschieht durch Verkleben der Plattenelemente mit dem Grundboden.

Die Nachteile eins Profilbodens gemäß DE 42 43 093 A1 bestehen u.a. darin, daß das Herstellen der Vorfixiereinrichtung aufwendig und kostspielig ist. Im weiteren wird die Witterungsbeständigkeit des Profilbodens durch die Ausgestaltung der Plattenstöße nicht vollständig gewährleistet. Zudem ist die Rutschsicherheit an den Plattenstößen eingeschränkt.

In Kenntnis dieser Gegebenheiten hat sich der Erfinder das Ziel gesetzt, eine kostengünstige Ladefläche bzw. eine Bodenplatte für eine Ladefläche anzubieten, welche nicht durch thermisches Schweißen verändert wird und darüber hinaus von geringem Gewicht, rutschsicher, fugendicht und witterungsbeständig ist.

Zur Lösung dieser Aufgabe führt die Lehre des unabhängigen Patentanspruches; die Unteransprüche geben günstige Weiterbildungen an.

Erfindungsgemäß ist die Ladefläche mit sie überspannenden Strangpreßprofilen aus einer Aluminiumlegierung belegt, die miteinander auf nicht thermischem Wege fest verbunden sind sowie die -- zumindest zwei der Strangpreßprofile erfassende -- Bodenplatte bilden. Als günstig hat es sich erwiesen, die Strangpreßprofile der Bodenplatte mit der Ladefläche sowie miteinander zu verkleben. So entsteht eine außergewöhnlich leichte Bodenplatte, die zudem geräuscharm, toleranzunabhängig, rutschsicher, fugendicht und witterungsbeständig ist - unter der Voraussetzung, daß letztgenannte Eigenschaft auch dem Kleber zukommen.

Die Bodenplatte ist vorteilhafterweise aus mehreren Strangpreßprofilen zusammengesetzt, von denen jeweils zwei benachbarte eine bodenwärts geschlossene Stoßfuge bilden, die von einer Klebeschicht überlagert ist.

Als günstig hat es sich erwiesen, die Strangpreßprofile parallel zur Stoßfuge mit die Rutschgefahr vermindernden Einformnuten zu versehen und dann die Klebeschicht zumindest in die beiden der Stoßfuge benachbarten Einformnuten mit einzugießen, um dadurch die Klebeverbindung zu verbessern. Diese klotzartige Klebeschicht wird aus einem lösungsmittel- und weichmacherfreien Elastikwerkstoff auf Zweikomponentenbasis hergestellt.

Nach einem weiteren Merkmal der Erfindung wird darüberhinaus zum Verkleben der Bodenplatte mit der Ladefläche ein wasserdichtes Polyurethan-System auf Einkomponentenbasis eingesetzt.

Für den Einbau im Bereich der Bordwände ist erfindunsgemäß ein querschnittlich L-förmiges Strangpreßprofil aus einem in Einbaulage in die Bodenplatte integrierten Schenkel und einem der Innenfläche der Bordwand zugeordneten Schenkel vorgesehen. Bei Einsatz dieser L-förmigen Strangpreßprofile ergibt sich eine aus diesen zusammengesetzte, mit der Ladefläche verklebte Einbauwanne.

Zuerst wird auf die Ladefläche der beschriebene Kleber aufgetragen, anschließend werden die die Bodenplatte bildenden Strangpreßprofile einschließlich der L-förmigen Randprofile in Fahrtrichtung so auf der Ladefläche verlegt, daß sich jene Einbauwanne bildet. Durch das Auftragen des anderen erwähnten Klebers werden die Strangpreßprofile zusätzlich miteinander verbunden. Dieses Material wird in flüssiger Form im Stoßbereich der Strangpreßprofile aufgebracht, so daß es die erwähnten Stoßfugen füllen kann. Das Material kann sowohl vergossen als auch gesprüht werden. Zum Erhöhen der Rutschsicherheit können nachträglich Granulate eingestreut werden, welche dann zum Teil aus der Klebeschichtoberfläche ragen.

Im Rahmen der Erfindung liegt es, daß das Strangpreßprofil an seiner den Einformnuten abgekehrten Unterfläche mit aus dieser herausgeformten Basisleisten versehen und die zwischen zwei Basisleisten verlaufende Profilunterfläche in Abstand zu den Unterflächen der Basisleisten angeordnet ist. Dadurch ergibt sich zwischen den auf der Ladefläche aufsitzenden Basisleisten ein flacher Hohlraum, der sich mit dem Kleber füllt. Auch dies u.a. trägt zur Geräuscharmut der Konstruktion bei.

Zudem hat es sich als günstig erwiesen, dem Strangpreßprofil entlang einer Längsseite eine stegartige Anschlußzunge anzuformen, die in Einbaulage in eine schulterartige Randeinformung an der Profilunterfläche des benachbarten Strangpreßprofils eingreift und den Boden der Stoßfuge bildet. Diese Maßgabe trennt die beiden unterschiedlichen Klebeschichten voneinander und ermöglicht es, in die Stoßnut zwischen zwei parallelen Strangpreßprofilen eine federförmige Klebeschicht einzubauen.

Als großen Vorteil des beschriebenen Einbausystems hat es sich herausgestellt, daß man mit zwei bis drei Strangpreßprofilen unterschiedlicher Breite nahezu beliebige Wannenbreiten herstellen kann. Ein diesbezügliches Zwischenprofil ist erfindungsgemäß querschnittlich beidseits mit den beschriebenen Randeinformungen versehen und kann beispielsweise den die Anschlußzunge aufweisenden kurzen Schenkel des L-förmigen Strangpreßprofils mit der Anschlußzunge eines anderen Bodenprofils verbinden.

Insgesamt ergibt sich eine bestechende einfache Möglichkeit, die oben genannten bekannten Bodenplatten aus Warzenblechen od.dgl. durch eine Leichtkonstruktion zu ersetzen, die einfach herzustellen und problemlos einzubauen ist sowie darüber hinaus die bereits genannten Eigenschaften bezüglich der Geräuschentwicklung der Rutschsicherheit und Witterungsbeständigkeit anbietet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen Teil eines Lastkraftwagens mit Kastenaufbau und wannenartigem Einbauboden;
- Fig. 2:: eine gegenüber Fig. 1 vergrößerte Stirnansicht eines Abschnittes des aus Strangpreßprofilen zusammengesetzten Einbaubodens;
- Fig. 3 bis Fig. 5:: gegenüber Fig. 2 vergrößerte Stirnansichten von Strangpreßprofilen des Einbaubodens;
- Fig. 6:: einen vergrößerten Ausschnitt aus Fig. 2;
- Fig. 7:: einen vergrößerten Querschnitt durch einen Teil des Einbaubodens mit Stoßfuge zweier Profile.

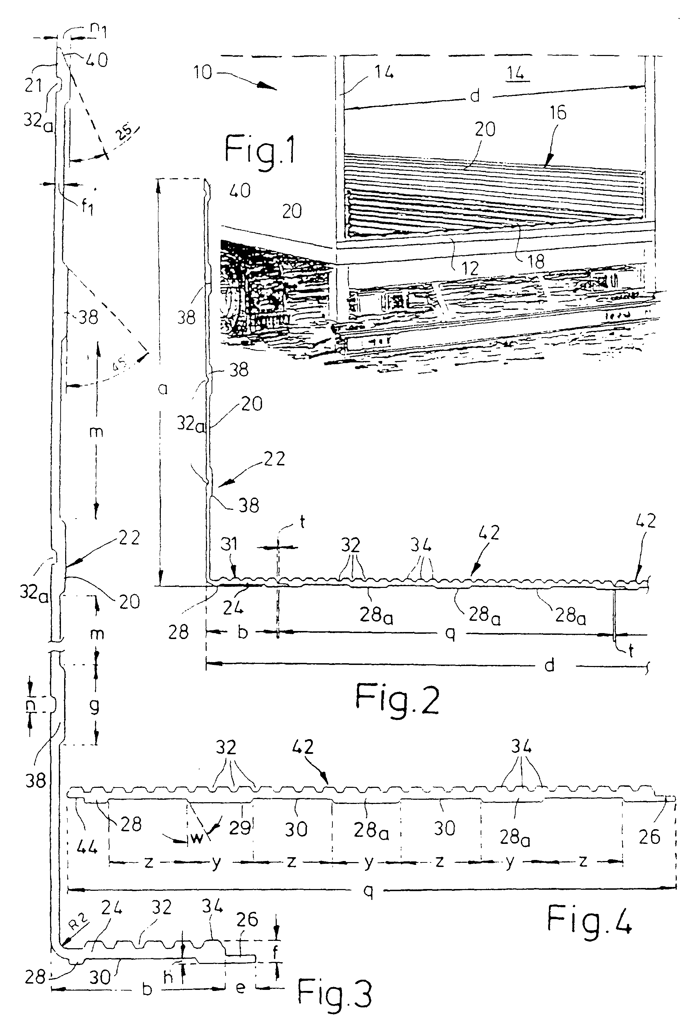

Im Kastenaufbau 10 eines in Fig. 1 angedeuteten Lastkraftwagens ist ein wannenartiger Einbauboden 16 aus einer Bodenplatte 18 und dazu rechtwinkeligen seitlichen Scheuerflanken 20 zu erkennen, die sich an den Innenflächen der beidseits der Ladefläche bzw. des Kastenbodens 12 aufragender Bord- oder Kastenwände 14 abstützen.

Die Scheuerflanke 20 der Fig. 2, 3 einer Höhe a von beispielsweise 270 mm ist der längere Schenkel eines Strangpreßprofils 22 L-förmigen Querschnittes aus einer Aluminiumlegierung, dessen kurzer Schenkel 24 eine wirksame Breite b von etwa 47,5 mm anbietet und der mit einer Anschlußzunge 26 der Länge e von 8 mm endet. Dieser kurze Schenkel 24 einer größten Profildicke f von 6 mm liegt mit Basisleisten 28 der freien Höhe h von 1,5 mm dem Kastenboden 12 so auf, daß zwischen den Basisleisten 28 die Profilunterfläche 30 in Abstand h zu den Unterflächen 29 der Basisleiste 28 bzw. zum Kastenboden 12 steht. Jene Anschlußzunge 26 ist Teil einer Basisleiste 28, liegt also in Einbaulage dem Kastenboden 12 auf.

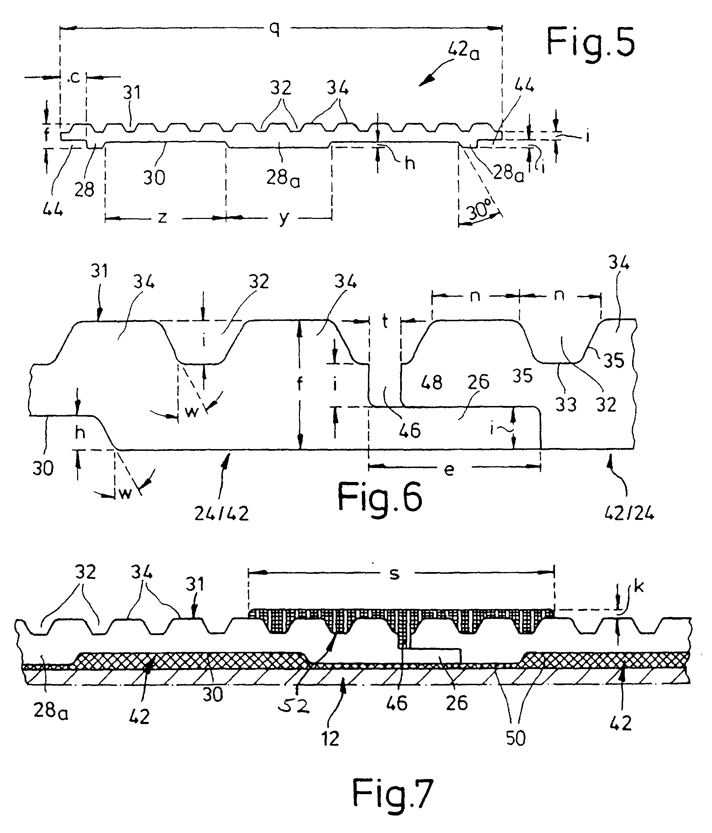

In die Schenkeloberfläche 31 sind parallele Einformnuten 32 der Tiefe i von 2 mm und einer maximalen Breite n von 4 mm eingebracht, die fünf Bodenstege 34 mit zum Nutengrund 33-- gemäß Fig. 6 in einem Winkel w von etwa 30° -- nach außen geneigten Flankenflächen 35 begrenzen.

Der lange Schenkel bzw. die Scheuerflanke 20 dieses Strangpreßprofiles 22 läßt in Fig. 2, 3 an seiner Innenfläche drei Verdickungen als leistenartige Ausformungen 38 erkennen, von denen die unteren beiden jeweils mit einer Außennut 32ₐ als mögliche Solltrennstelle ausgestattet sind. Die Leistenhöhe g mißt etwa 21 mm, der Abstand m zwischen benachbarten Ausformungen 38 hier 46,5 mm. Die Dicke n₁ der Ausformungen 38 entspricht der erwähnten maximalen Breite n der Einformnuten 32, wobei die Wanddicke f₁ der zwischen den Ausformungen 38 verlaufenden schmalen Profilabschnitte hier 2,5 mm beträgt.

Das freie Ende 21 des langen Schenkels 20 des Strangpreßprofiles 22 bietet eine zum Kasteninneren abwärts geneigte Pultfläche 40 an, welche in Einbaulage einen sanften Übergang zur Innenfläche der Kastenwand 14 ergibt.

An den kurzen Schenkel 24 des Strangpreßprofiles 22 schließt in Fig. 2 ein weiteres stranggepreßtes Profil 42 der Breite q von 223 mm an, welches plattenförmig ausgebildet ist und in Einbaulage sowohl einerseits mit dem kurzen Schenkel 24 als auch anderseits mit weiteren plattenartigen Profilen 42 fluchtet.

Die Anschlußzunge 26 des einen Strangpreßprofils 22, 42 greift in eine stufenförmige Randeinformung 44 -- der Breite c von 6,5 mm -- des benachbarten Profiles 42 ein; zwischen beiden aneinanderliegenden Strangpreßprofilen 22, 42 entsteht dabei oberhalb der Anschlußzunge 26 eine Stoßfuge 46 der Breite t von etwa 1,5 mm, die Fig. 6 zwischen gegenüberstehenden Fugenwänden 48 der Strangpreßprofile 22, 42 ohne weiteres erkennen läßt.

Das Profil 42 ist gemäß Fig. 2, 4 an seiner Profiloberfläche 31 durchgehend wechselweise mit den bereits geschilderten Einformnuten 32 und Bodenstegen 34 ausgestattet. Nach unten hin sind in einem Abstand z von 30 mm zueinander mehrere Basisleisten 28ₐ der Breite y von 25 mm vorgesehen.

Fig. 5 gibt ein weiteres Profil 42ₐ einer Breite q von hier 107 mm wieder mit nur einer Basisleiste 28ₐ der Breite y. Dieses Profil 42ₐ weist beidseits jeweils eine bodenwärtige Randeinformung 44 auf, ist also als Zwischenstück zwischen zwei Profilenden mit Anschlußzunge 26 gedacht. Das aus AlMgSi0.5 F25 geformte Profil 42ₐ bietet beispielhaft die folgenden Querschnittswerte an:

| | | | |
|---|---|---|---|
| F | 4.39 cm2 | Gewicht | 1.186 kg/m |
| Ua | 25.29 cm | | |
| Ix | .09 cm4 | Iy | 38.16 cm4 |
| Wx | .28 cm3 | Wy | 7.13 cm3 |
| Bxm | -.32 cm | Eym | 5.35 cm |

Diese liegen bei dem Profil 42 der Fig. 4 aus dem gleichen Werkstoff bei:

| | | | |
|---|---|---|---|
| F | 9.90 cm2 | Gewicht | 2.672 kg/m |
| Ua | 53.73 cm | | |
| Ix | .22 cm4 | Iy | 420.18 cm4 |
| Wx | .73 cm3 | Wy | 36.07 cm3 |
| Exm | -.31 cm | Eym | 11.65 cm |
| Ixy | -.61 cm4 | ALPHA | 89.92 Grad |
| Imax | 420.18 cm4 | Imin | .22 cm4 |

Beim Herstellen der Einbauwanne 16 wird zuerst ein Kleber 50 auf den Kastenboden 12 aufgetragen, anschließend werden die Strangpreßprofile 22, 42, 42ₐ -- einschließlich der Scheuerflanken 20 -- in Fahrtrichtung so verlegt, daß sich die in Fig. 1 skizzierte Einbauwanne 16 ergibt.

Als Kleber 50 wird bevorzugt ein wasserdichtes Polyurethan-System auf Einkomponentenbasis eingesetzt, das selbsthärtend ist. Dessen Reißdehnung beträgt etwa 400 % bei einem Abriebverhalten nach DIN 53516 von etwa 100 cmm. Es entsteht ein Elastiksystem guter mechanischer Belastbarkeit, geringen Abriebs sowie hoher Reiß- und Weiterreißfestigkeit. Diese für Verschleißschutz und Abdichtung wichtigen Eigenschaften werden ergänzt durch eine optimale Elastizität zwischen -40°C und +110°C sowie Haftfähigkeit auf Aluminium.

Durch den Einsatz eines weiteren solchen Elastik-Materials auf Zweikomponentenbasis, das lösungsmittel- und weichmacherfrei ist, werden die Strangpreßprofile 22, 42, 42ₐ miteinander von oben her verbunden; das Klebematerial wird in flüssiger Form im Stoßbereich der Strangpreßprofile 22, 42, 42ₐ angebracht, wie dies Fig. 7 verdeutlicht. Die dort mit 52 bezeichnete Ansammlung von Klebwerkstoff wird in einer Querschnittsbreite s vergossen und/ oder aufgesprüht; die Querschnittsbreite s beträgt etwa 38 mm und erfaßt beidseits der Stoßfuge 46 jeweils zwei Einformnuten 32, in der die Kleberschicht 52 verzahnt sitzt. Diese überlagert die Profiloberfläche 31 in einer Schichtdicke k von etwa 1 mm.

Die Rutschsicherheit der Profiloberfläche 31 wird durch nachträgliches Einstreuen von Granulat erhöht. Die Gesamtbreite d des leichten, fugendichten, rutschsicheren, geräuscharmen und witterungsbeständigen Einbaubodens bzw. der Einbauwanne 16 ist durch den Einsatz unterschiedlicher Strangpreßprofile 22, 42, 42ₐ vorwählbar.

## Patentansprüche

1. Ladefläche für ein Nutzfahrzeug mit sie überspannenden Strangpreßprofilen (24, 42, 42ₐ), die miteinander auf nicht thermischem Wege fest verbunden sind und eine zumindest zwei Strangpreßprofile erfassende Bodenplatte (18) bilden, wobei die Strangpreßprofile der Bodenplatte mit der Ladefläche (12) verklebt sind,
**dadurch gekennzeichnet,**
**daß** jeweils zwei benachbarte Strangpreßprofile (24, 42, 42ₐ) eine bodenwärts geschlossene Stoßfuge (46) bilden und diese von einer Klebeschicht (52) überlagert ist.

2. Ladefläche nach Anspruch 1, **dadurch gekennzeichnet, daß** die Strangpreßprofile (24, 42, 42ₐ) parallel zur Stoßfuge (46) Einformnuten (32) aufweisen und die Klebeschichc (52) zumindest in die beiden der Stoßfuge benachbarten Einformnuten eingreift.

3. Ladefläche nach Anspruch 1 oder 2, **gekennzeichnet durch** einen lösungsmittel- und weichmacherfreien Elastikwerkstoff auf Zweikomponentenbasis als Klebeschicht (52) für die Stoßfuge (46).

4. Ladefläche nach einem der Ansprüche 1 bis 3, **dadurch gekennzeichnet, daß** in die Oberfläche der Klebeschicht (52) Granulat eingebaut ist.

5. Ladefläche nach einem der Ansprüche 1 bis 4, **gekennzeichnet durch** ein wasserdichtes Polyurethan-System auf Einkomponentenbasis als Kleber (50) zwischen Ladefläche (12) und Bodenplatte (18).

6. Ladefläche mit wenigstens einer diese seitlich begrenzenden Bordwand nach einem der Ansprüche 1 bis 5, **gekennzeichnet durch** ein querschnittlich L-förmiges Strangpreßprofil (22) aus einem in Einbaulage in die Bodenplatte (18) integrierten Schenkel (24) und einem der Innenfläche der Bordwand (14) zugeordneten Schenkel (20).

7. Ladefläche nach wenigstens einem der Ansprüche 1 bis 6, **gekennzeichnet durch** eine mit ihr verklebte Einbauwanne (16) aus Strangpreßprofilen (24, 42, 42ₐ).

8. Ladefläche nach wenigstens einem der Ansprüche 1 bis 7, **dadurch gekennzeichnet, daß** das Strangpreßprofil (24, 42, 42ₐ) an seiner den Einformnuten (32) abgekehrten Unterfläche mit ausgeformten Basisleisten (28, 28ₐ) versehen ist und die zwischen zwei Basisleisten verlaufende Profilunterfläche (30) in Abstand (h) zu den Unterflächen (29) der Basisleisten angeordnet ist.

9. Ladefläche nach wenigstens einem der Ansprüche 1 bis 8, **dadurch gekennzeichnet, daß** dem Strangpreßprofil (24, 42) entlang einer Längsseite eine stegartige Anschlußzunge (26) angeformt ist, die in Einbaulage in eine schulterartige Randeinformung (44) am Rande der Profilunterfläche des benachbarten Strangpreßprofils (42, 42ₐ) eingreift und den Boden der Stoßfuge (46) bildet.

10. Ladefläche nach wenigstens einem der Ansprüche 1 bis 9, **gekennzeichnet durch** ein Strangpreßprofil (42ₐ) mit querschnittlich beidseits vorgesehener Randeinformung (44) an der Profilunterfläche.

11. Ladefläche nach Anspruch 6 oder 7, **dadurch gekennzeichnet, daß** der der Bordwand (14) zugeordnete Schenkel (20) des Strangpreßprofils (22) parallel zum anderen Schenkel (24) mit Solltrennlinien (32ₐ) versehen ist.

12. Ladefläche nach Anspruch 6 oder 7, **dadurch gekennzeichnet, daß** der der Bordwand (14) zugeordnete Schenkel (20) des Strangpreßprofils (22) mit einer endwärtigen Pultfläche (40) ausgestattet ist, welche zum kurzen Schenkel (24) abwärts geneigt verläuft.

## Claims

1. Loading surface for a truck spanned by extruded profiles (24, 42, 42a) which are firmly connected together nonthermally and form a base plate (18) comprising at least two extruded profiles, where the extruded profiles of the base plate are glued to the loading surface (12),
**characterised in that**
each two adjacent extruded profiles (24, 42, 42a) form a butt joint (46) closed at the base and overlaid by a layer of adhesive (52).

2. Loading surface according to claim 1, **characterised in that** the extruded profiles (24, 42, 42a) have moulding grooves (32) parallel to the butt joint (46), and the layer of adhesive (52) penetrates into at least the two moulding grooves adjacent to the butt joint.

3. Loading surface according to claim 1 or 2, **characterised in that** the adhesive layer (52) for the butt joint (46) is a solvent- and softener-free elastic material on a two-component basis.

4. Loading surface according to any of claims 1 to 3,
**characterised in that** granulate is integrated into the surface of the adhesive layer (52).

5. Loading surface according to any of claims 1 to 4,
**characterised in that** the adhesive (50) between the loading surface (12) and the base plate (18) is a watertight polyurethane system on a single-component basis.

6. Loading surface according to any of claims 1 to 5 with at least one edge wall limiting this at the side,
**characterised by** an extruded profile (22) which is L-shaped in cross-section comprising a leg (24) integrated in the base plate (18) in the installation position, and a leg (20) allocated to the inner face of the edge wall (14).

7. Loading surface according to at least one of claims 1 of 6, **characterised by** a built-in trough (16) glued to this and made of extruded profiles (24, 42, 42a).

8. Loading surface according to at least one of claims 1 to 7, **characterised in that** the extruded profile (24, 42, 42a) has on its under-surface facing away from the moulding grooves (32), protruding moulded base strips (28, 28a), and the profile under-surface (30) running between two base strips is arranged at a distance (h) from the under-surface (29) of the base strips.

9. Loading surface according to at least one of claims 1 to 8, **characterised in that** a web-like connecting tab (26) is moulded onto the extruded profile (24, 42) along one long side, which tab in the installation position engages in a shoulder-like peripheral recess (44) on the edge of the profile under-surface of the adjacent extruded profile (42, 42a) and forms the base of the butt joint (46).

10. Loading surface according to at least one of claims 1 to 9, **characterised by** an extruded profile (42a) with a peripheral recess (44) on the profile under-surface on both sides in cross-section.

11. Loading surface according to claim 6 or 7, **characterised in that** the leg (20) allocated to the edge wall (14) of the extruded profile (22) has nominal separating lines (32a) parallel to the other leg (24).

12. Loading surface according to claim 6 or 7, **characterised in that** the leg (20) of the extruded profile (22) allocated to the edge wall (14) is fitted with a flat surface (40) at the end, which surface runs tilted downwards towards the short leg (24).

## Revendications

1. Surface de chargement pour un véhicule utilitaire comportant des profilés extrudés enveloppants (24, 42, 42ₐ), qui sont reliés entre eux de façon fixe selon une liaison non thermique, et une plaque de base (18), qui s'étend sur au moins deux profilés extrudés, les profilés extrudés de la plaque de base étant collés à la surface de chargement (12),
**caractérisée en ce**
**que** respectivement deux profilés extrudés voisins (24, 42, 42ₐ) forment un joint d'aboutement (46), fermé du côté du plancher et qu'une couche adhésive (52), est superposée à ce joint.

2. Surface de chargement selon la revendication 1, **caractérisée en ce que** les profilés extrudés (24, 42, 42ₐ) possèdent des rainures moulées (32) qui s'étendent parallèlement au joint d'aboutement (46) et que la couche d'adhésif (52) s'engage au moins dans les deux rainures moulées voisines du joint d'aboutement.

3. Surface de chargement selon la revendication 1 ou 2, **caractérisée par** un matériau élastique exempt de solvant et de plastifiant et réalisé à base de deux constituants en tant que couche d'adhésif (52) pour le joint d'aboutement (46).

4. Surface de chargement selon l'une des revendications 1 à 3, **caractérisée en ce que** des granulés sont intégrés dans la surface de la couche d'adhésif (52).

5. Surface de chargement selon l'une des revendications 1 à 4, **caractérisée par** un système formé de polyuréthane étanche à l'eau formé d'un seul constituant, en tant qu'adhésif (50) entre la surface de chargement (12) et la plaque de base (18).

6. Surface de chargement comportant au moins une paroi latérale, qui limite latéralement cette surface, selon l'une des revendications 1 à 5, **caractérisée par** un profilé extrudé (22) en forme de L en coupe transversale, constitué par une branche (24), qui dans la position de montage est intégrée dans la plaque de base (18), et par une branche (20) associée à la surface intérieure de la paroi latérale (14).

7. Surface de chargement selon au moins l'une des revendications 1 à 6, **caractérisée par** une cuvette de montage (16) collée à la surface de chargement et formée de profilés extrudés (24, 42, 42ₐ)

8. Surface de chargement selon au moins l'une des revendications 1 à 7, **caractérisée en ce que** le profilé extrudé (24, 42, 42ₐ) comporte, sur sa surface intérieure tournée à l'opposé des rainures moulées (32), des barrettes de base conformées (28, 28ₐ) et que la surface inférieure profilée (30), qui s'étend entre deux barrettes de base, est disposée à une distance (h) des surfaces inférieures (29) des barrettes de base.

9. Surface de chargement selon au moins l'une des revendications 1 à 8, **caractérisée en ce que** sur le profilé extrudé (24, 42) est formée, le long d'un côté longitudinal, une languette de raccordement sous forme de réglette (26), qui, dans la position montée, s'engage dans une moulure en forme d'épaulement (44) formée sur le bord de la surface inférieure du profilé extrudé voisin (42, 42ₐ) et forme le fond du joint d'aboutement (46).

10. Surface de chargement selon au moins l'une des revendications 1 à 9, **caractérisée par** un profilé extrudé (42ₐ) possédant une moulure de bord (44), qui en coupe transversale est prévue des deux côtés sur la surface inférieure du profilé.

11. Surface de chargement selon la revendication 6 ou 7, **caractérisée en ce que** la branche (20), qui est associée à la paroi latérale (14), du profilé extrudé (22) comporte des lignes de séparation de consigne (32a), qui s'étendent parallèlement à l'autre branche (24).

12. Surface de chargement selon la revendication 6 ou 7, **caractérisée en ce que** la branche (20), associée à la paroi latérale (14), du profilé extrudé (22) est équipé d'une surface d'extrémité (40) en biseau, qui est inclinée vers le bas en direction de la branche courte (24).
